Europäisches Patentamt

European Patent Office

Office européen des brevets

(11) Publication number: **0 240 230**
**A2**

(12) **EUROPEAN PATENT APPLICATION**

(21) Application number: **87302559.7**

(22) Date of filing: **25.03.87**

(30) Priority: **26.03.86 GB 8607577**
**27.05.86 GB 8612820**

(43) Date of publication of application:
**07.10.87 Bulletin 87/41**

(84) Designated Contracting States:
**AT BE CH DE ES FR GB IT LI NL SE**

(51) Int. Cl.⁴: **F16L 47/00 , F16L 25/02**

(71) Applicant: **N.V. RAYCHEM S.A.**
**Diestsesteenweg 692**
**B-3200 Kessel-lo(BE)**

(72) Inventor: **Van Loo, Robert Henri**
**Slangenstraat 70**
**B-3202 Linden(BE)**
Inventor: **Cordia, Johannes Maria**
**Los Trancos Circle 132**
**Portola Valley California(US)**

(74) Representative: **Auckland, Jacqueline et al**
**I.P.L.D. Raychem Limited Swan House 37-39,**
**High Holborn**
· **London WC1(GB)**

(54) **Assembly and method for joining elongate substrates.**

㊼ A joint is made between elongate substrates
(2,4) (such as pipes) of a conducting material by
positioning a tubular insert (6) of an insulating ma-
terial between the substrates, the insert having a
circumferentially extending rib (8) to prevent end
faces of the substrates from coming into contact. A
heat-recoverable sleeve (14) is used to seal the joint.

The joint of the invention provides a dielectric
joint between the joined substrates.

Fig.2.

## Assembly and Method for Joining Elongate Substrates

This invention relates to an assembly and a method for joining together elongate substrates, and more particularly to an assembly and a method for making dielectric joints in pipelines.

Metal pipelines for the transport of gas or fluid materials are frequently subject to electrochemical corrosion which is greatly accelerated by transient electrical currents passing along the pipe. In order to prevent such transient currents from travelling along any substantial length of pipeline, it is known to provide dielectric joints between adjacent lengths of pipe, which consist of prefabricated metal fittings which are screwed or welded to the ends of the adjacent lengths of pipe. Between the prefabricated metal fittings is situated a pre-installed insulation piece which provides an electrical separation between the metal fittings and is held in place by flanges on the fittings. When the dielectric joint is in position, the pre-installed insulation piece provides a barrier to the passage of transient electrical currents along the pipeline.

Dielectric joints of the kind described are expensive and many such joints are required for a long pipeline. In addition, each joint requires two welds or screw threads to be formed on the ends of the adjacent lengths of pipe, and they are therefore costly and time consuming to install and require relatively skilled labour.

There is therefore a need for a cheaper way of electrically insulating adjacent lengths of pipe which will nevertheless provide the appropriate electrical insulation and also satisfactory pressure retention and pull-out resistance as required in the pipeline industry.

We have now found that an improved dielectric joint between substrates such as lengths of pipes may be made by the use of an annular electrically insulating insert and a recoverable sleeve adapted to be recovered over the annular member and the ends of the adjacent lengths of pipe.

In one aspect, the invention provides an assembly for joining and electrically insulating adjacent lengths of an elongate hollow metallic substrate, which comprises a tubular insert for receiving the ends of the adjacent lengths of the substrate, the insert having a circumferentially extending rib for preventing the abutting ends of the substrate lengths from coming into contact, and a heat-recoverable sleeve for enclosing and sealing the joint, the sleeve being coated with a layer of a bonding material for bonding the sleeve to the underlying lengths of the substrate.

In another aspect the invention provides a method of joining an electrically insulating adjacent lengths of an elongate hollow metallic substrate, which comprises:

a) engaging the ends of the lengths of substrate with a tubular insert, the insert having a circumferentially extending rib to prevent the lengths of substrate from coming into abutting contact;

b) enclosing the joint with a heat-recoverable sleeve that is coated with a layer of bonding material; and

c) heating the sleeve to cause it to recover so as to seal the joint.

In a further aspect the invention provides an electrically insulating joint between adjacent lengths of an elongate hollow metallic substrate, which comprises a tubular insert formed of electrically insulating material having a rib which abuts against opposing ends of the lengths of elongate hollow metallic substrate and a recoverable sleeve recovered over the tubular insert and the end regions of the lengths of substrate.

The annular insert may be arranged to be inserted partially within the ends of the lengths of substrate. The rib will then stand proud of the outer circumferential surface of the insert. This arrangement has the advantage that leakage currents are hindered from passing from the internal surface of one length of substrate to that of the adjacent length, for example, via an electrically conducting fluid, including a moist gas, that is being transmitted in the pipe. The passage of current along the outer surface is hindered by the recovered sleeve. This is a significant advantage, and generally outweighs the disadvantage of impediment to flow of fluid in the pipe by the portions of insert positioned therein.

In another embodiment, the insert may be arranged to receive the ends of the lengths of substrates inserted therewithin, the rib being proud of the inner circumferential surface of the insert. In this embodiment, the sleeve will be recovered over the outer surface of the insert.

For optimum insulation, the wall of the insert may have an H-shaped cross-section, in which respective lengths of a substrate such as a pipe fit between the arms of the H.

A recoverable article is one whose dimensional configuration may be made to change when subjected to an appropriate treatment. Usually such articles recover towards an original shape from which they have previously been deformed but the term "recoverable", as used herein, also includes an article which on recovery adopts a new configuration, even if it has not been previously deformed.

It is preferred to use sleeves which are recoverable by the action of heat. In their most common form, heat-recoverable sleeves comprise recoverable material exhibiting the property of elastic or plastic memory as described, for example, in US-2027962, US-3086242 and US-2597372. As is made clear in, for example, US-2027962, the original dimensionally heat-stable form may be a transient form in a continuous process in which, for example an extruded tube is expanded, whilst hot, to a dimensionally heat-unstable form but, in other applications, a preformed dimensionally heat stable article is deformed to a dimensionally heat unstable form in a separate stage.

Recently a number of heat-recoverable articles which are based on fabrics have been devised, and are the subject of GB-A-2133639, GB-A-2133740, GB-A-2134334, GB-A-2135632, GB-A-2135836 and GB-A-2139142, the disclosures of which are included herein by reference. Heat recoverable sleeves based on such fabrics are preferred for use in the present invention, since they can be arranged to withstand high internal pressures.

The most common method of heating heat-recoverable sleeves is by means of an open flame, provided for example by a propane torch. A propane torch has the advantage of being easily portable and of providing the correct temperature for the large sleeves most commonly used. However uniform heat application in confined spaces is difficult using a propane torch, and further the use of a torch is often prohibited where flammable materials are present, for example where a heat recoverable article is to be used to seal a leaking gas pipeline.

Thus, although external heating methods are not necessarily excluded from the scope of the present invention, it is preferred to use a sleeve using an internal heating method, and especially an electrical heating method, most preferably an electrical heating method as described and claimed in our EP-A-158519, the entire disclosure of which is included herein by reference.

According to the present invention, the sleeve may be provided with a sheet of bonding material contiguous with the recoverable portion of the sleeve, to form the inner layer when the sleeve is wrapped around the joint. Preferably the layer of bonding material will be reinforced, for example by means of fibres, more preferably by an open weave of fibres. The sheet of bonding material may comprise a sealant or an adhesive, a hot-melt adhesive being particularly preferred. The use of a sheet of bonding material to provide the inner layer of the wrapped around sleeve has the advantage that, as the sleeve recovers, the substrate to which the sleeve is bonded will be coated around its entire perimeter with the bonding material, notwithstanding any creep back of the internal edge of the layer of heat-recoverable material. The layer of bonding material can also serve to reduce such creep back. The use of an inner layer of adhesive in a multiply wrapped recoverable sleeve is the subject of contemporaneously filed application no. ........... (our ref: B126A) entitled "Assembly for Covering an Object", which has a common declaration of priority with the present application. The disclosure of that application is incorporated herein by reference.

The invention will now more particularly be described with reference to the provision of dielectric joints in gas pipelines although it is to be understood that it is not limited thereto.

Gas pipelines range in diameter from about 1.9 cm to 20.3 cm. and operate at gas pressures of from about 1 to 200 millibars. Ideally the dielectric joints should be free of materials likely to give rise to electrochemical corrosion problems, must be gas-tight at test pressures of 7.5 bars for 24 hours and capable of withstanding a pull-out force of at least 4 tonnes, preferably of about 8 tonnes. In addition, the joint should not provide any substantial restriction or obstacle to gas flow in the pipeline and should have an electrical resistance of at least 8M$\Omega$, preferably of at least 10M$\Omega$.

Preferably the rib on the insert has a thickness of at least 0.05 cm. between the end faces which abut the pipe ends, preferably from 0.15 to 0.5 cm, to provide adequate electrical insulation. The circumferentially extending rib of the insert is preferably circumferentially continuous for optimum insulation and also for ease of manufacture. It may however be non-continuous, even to the extent that it consists of two or more studs spaced apart around the circumference of the insert. Preferably the electrically insulating material of the annular member has a dielectric constant of at least 1.0 kV, and preferably from 1.5 kV to 3 kV. It is particularly preferred that the annular member be formed from a polymeric material since such materials can have outstanding resistance to environmental conditions, can be inert to most corrosive materials and can have good electrical insulation properties. Suitable polymeric materials include thermoplastics for example, polyolefins such as polyethylene, polypropylene, and copolymers thereof, polyesters, polyamides such as nylon, polyethers, polyketones, polysulphones, polysiloxanes and thermoset resins such as polyurethanes and urea-formaldehyde resins.

The heat recoverable sleeve is preferably provided with an internal heating means, for example an electrical heating element.

The above mentioned EP-A-158519 describes inter alia a heat recoverable cover comprising a fabric which has recoverable cross-linked fibres arranged in its warp or its weft so that it is recoverable in substantially one direction, and an electrical resistance heating element in thermal contact with the cover, which heating element is arranged to pass back and forth along, or generally parallel to, the surface of the cover in a serpentine path. Such a cover is preferred for use as the heat recoverable sleeve of the present invention.

The resistance heating element may conveniently be powered by connecting the element to a power source. Preferably, the loop portions of the serpentine-like element project beyond the edges of the cover, inter alia to provide a convenient point of attachment for the power source.

In another embodiment, the heating element may be provided by a mesh having a plurality of apertures through its thickness which allow the mesh to be deformed in a planar sense.

Preferably the heat recoverable fabric is used in combination with a matrix polymer layer which softens when heated to accommodate recovery of the fabric, to form a single composite structure. The heat-recoverable fabric is preferably bonded to, more preferably embedded in, the polymer matrix material.

Further information concerning the materials and construction of the heat recoverable fabric, the resistance heating element and the polymer matrix material may be obtained from the above-mentioned EP-A-158519.

The fabric may contain only heat recoverable fibres, but preferably it contains both heat recoverable and non-heat recoverable fibres. The fibres may be arranged in any suitable pattern, but preferably all the fibres extending in the direction of the recoverable fibres are recoverable, and all the other fibres are non-heat recoverable. It is especially preferred for the non-heat recoverable fibres to be formed from high strength materials which can resist the high pressures in the pipeline and soil stress movements and thereby reinforce the sleeve. Such reinforcing fibres may include glass fibres, metal fibres, carbon fibres, and fibres of synthetic polymers such as polyesters and polyketones. Preferably the reinforcing fibres are glass fibres. Preferably the reinforcing fibre density in the fabric is from 1 to 10 fibres/cm, most preferably from 5 to 8 fibres/cm, such as, for example 6 to 7 fibres/cm.

Preferably the reinforcing fibre density in the fabric is from 1 to 10 fibres/cm, most preferably from 5 to 8 fibres/cm, such as, for example 6 to 7 fibres/cm.

Preferably the distance between adjacent lengths of the heating element is from 2 to 12 mm apart, most preferably from 6 to 10 mm, such as for example 8 mm.

The sleeve is provided with a coating of a bonding material, such as an adhesive or a sealant, for example a coating of a pressure-sensitive, hot melt or curable adhesive or a mastic. The adhesive or sealant is preferably heat-activatable and is preferably selected such that the heat provided by the heating element to recover the sleeve also activates the adhesive or sealant. Most preferably the coating comprises a hot melt adhesive since these materials have superior shear strength and long term resistance to the pressure inside the gas pipeline. Suitable hot melt adhesives are described in UK Patent No. 1588721.

Where the gas pipeline has no conveniently accessible end, for example when the ends of the two lengths of pipe to be joined are very close together, or are situated in a confined space such as a man-hole, a tubular sleeve cannot easily be slid over the joint. To overcome this problem wraparound sleeves have been developed. A wraparound sleeve is a sleeve which can be wrapped around a substrate and then secured in the wrapped around configuration. The wraparound sleeve may be provided with closure members adjacent opposing edges, which interlock or which are held together by a further member, or the wrapped sleeve may be secured in the wrapped configuration by, for example an adhesive coated patch closure.

The wraparound sleeve is preferably arranged to be wrapped around the substrate(s) more than once. One way to achieve this is to provide two closure members spaced apart to define a first sleeve portion between them, which first sleeve portion can be wrapped once around a substrate, and secured in the wrapped configuration by the closure members. One or both of the closure members is preferably spaced from a free end of the sleeve to define one or more second sleeve portions that together can be wrapped, at least once around the substrate.

The multiple wrapping of the sleeve advantageously increases the thickness of the sleeve around the substrate and hence increases the pressure that the wrapped sleeve can retain. The use of a mesh heater also increases the pressure that the sleeve can retain.

When the sleeve is required to withstand increased internal pressures, it can be advantageous to employ a second sleeve positioned outside the sleeve. The use of a second sleeve allows multiple layers of sleeve to be built up without a high power requirement of an electrical heater when used.

For some applications it may be desirable to provide the multiple layer sleeve pre-wrapped and secured, for example by stitching, in the form of a tubular sleeve.

Examples of suitable multiple layer heat recoverable sleeve constructions are described in the above-mentioned EP-A-158519.

A variety of closure systems may be used to hold a wraparound sleeve around a substrate. Commonly used closure systems include adhesive coated paches such as those disclosed in US-4200676, and the rail and channel closure disclosed in GB-1155470. It is particularly preferred however to use the girdle closure that is the subject of contimporaneously filed application no. .......... (our ref: B126A), entitled "Assembly for Covering an Object", which has a common declaration of priority with the present application. The disclosure of that application is incorporated herein by reference.

Briefly, the girdle member is wrapped around a recoverable sleeve to hold it in its wrapped configuration during recovery. The girdle is preferably formed from a material that is resilient, heat resistant or both, and should be of such length that it can encircle the substrate completely.

By using a resilient girdle member it is possible to arrange that the girdle member is in tension when installed around the recoverable sleeve, and remains in tension during recovery, so that the girdle member follows the recovery direction of the sleeve and holds the sleeve in compression during recovery, thereby helping to eliminate between the sleeve and the substrate, or voids between the multiple wraps of the sleeve, or both, and keeping the sleeve in its wrapped configuration.

The girdle member may engage a single closuremember on the sleeve. The closure member, where present, can, for example, be a bar on the sleeve which cooperates with a hook on the girdle member, one or more press-studs, or gripping jaws. Any suitable mechanical attachment device can alternatively be used. In the wrapped configuration, the first end region of the sleeve carrying the closure member will of course normally overlie the opposed second end region of the sleeve. Where a lower recovery sleeve is used, for example a sleeve with a recovery of less than 15%, it is possible to omit the closure member and rely on the tension of the girdle to hold the sleeve in place.

The girdle will preferably be provided with means for fastening it around the substrate. The fastening means may comprise press-studs, hooks and eyes, buttons and button-holes or other similar arrangements.

Assemblies and methods in accordance with the present invention will now be described with reference to the accompanying drawings, in which:

Figures 1 to 3 are sectional elevations through pipe joints made using assemblies in accordance with the invention; and

Figures 4 and 5 show how a recoverable sleeve may be fastened around a pipe joint using a girdle closure.

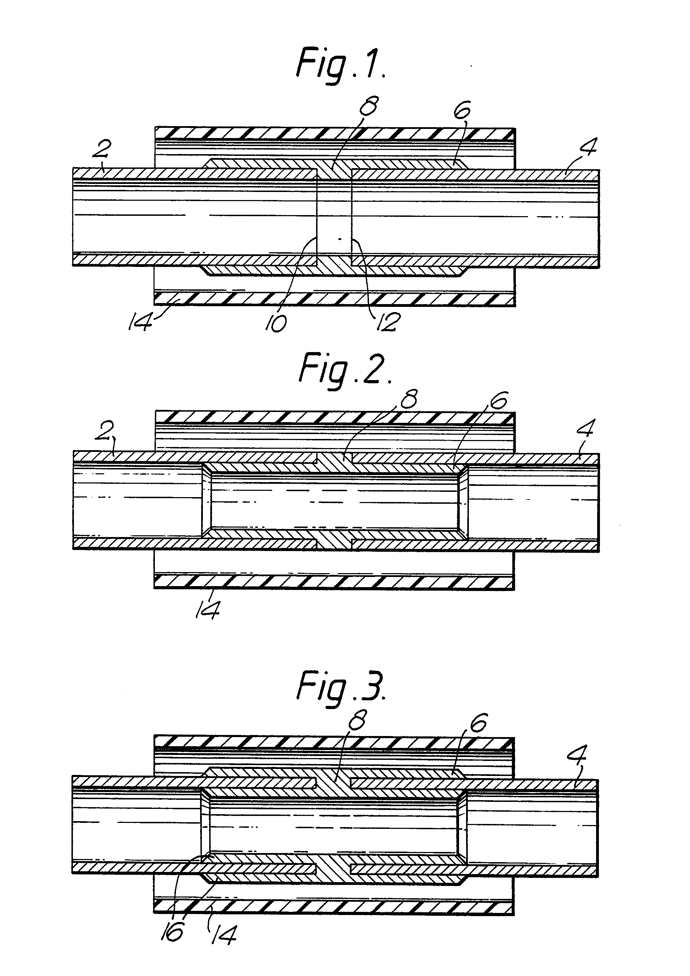

Referring to the drawings, in particular to Figures 1 to 3, in which different configurations of the insert are shown with like reference numerals indicating like components.

Metallic pipe lengths 2, 4 are positioned so as to engage a tubular insert 6. The insert has a circumferen tially extending flange 8 which prevents the ends 10, 12 of the pipe lengths 2, 4 from coming into abutting contact. A recoverable sleeve 14 is shown, prior to its recovery, multiply wrapped around the joint between the pipe lengths. The sleeve 14 comprises a laminate of recoverable material, preferably a recoverable fabric, and a layer of a hot-melt adhesive. Preferably the sleeve has an integral electrical heater which may be provided by one or more wires, or a deformable mesh.

The embodiment of insert 6 shown in Figure 1 is arranged to receive the pipe lengths 2, 4 therewithin. The circumferentially extending flange 8 is thus provided on an inner circumferentially surface of the insert 6.

The embodiment of insert 6 shown in Figure 2 is arranged to be inserted within the pipe lengths 2, 4. The flange 8 is provided on the outer circumferential surface of the insert 6. This embodiment has the advantage that the pipe lengths 2, 4 are insulated at their ends 10, 12 from fluid being carried in the pipe. This allows electrically conductve fluids such as moist gases to be carried in the pipe with reduced risk of electrical current being transmitted between the pipe lengths. The installed recoverable sleeve fulfils the same function (amongst other functions) on the outer surface of the pipe.

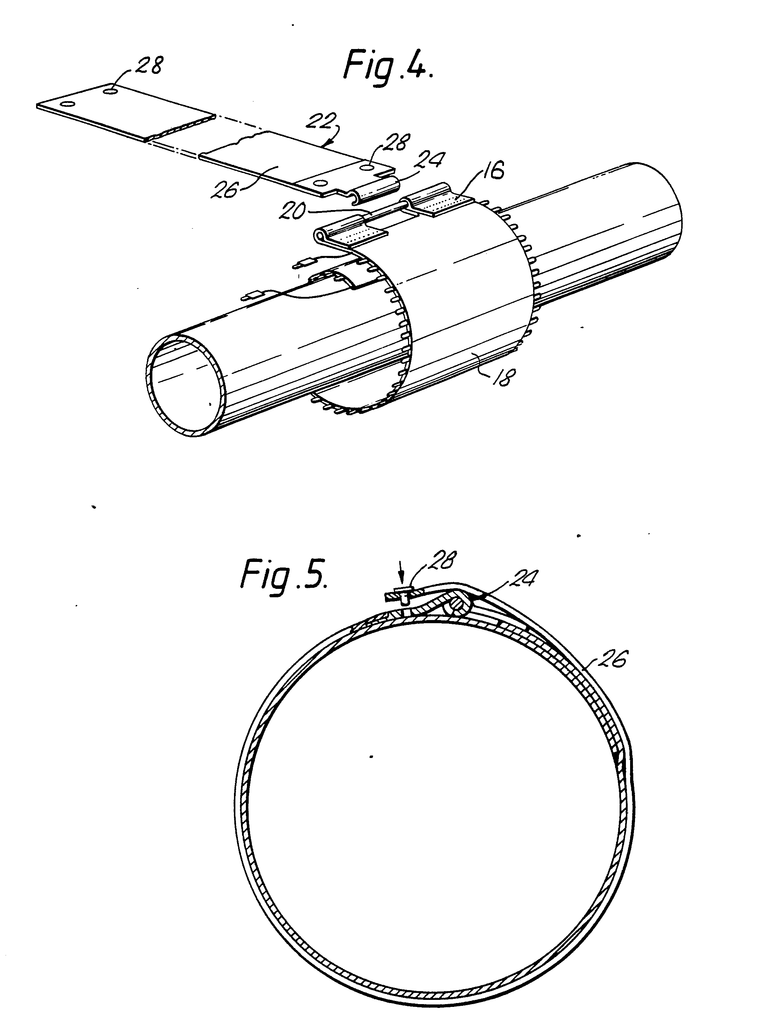

The embodiment of insert 6 shown in Figure 3, the wall of the insert has an H-shaped cross-section, the ends 10, 12 of the pipe lengths 2, 4 being inserted between the arms 16 of the H. By use of such an insert, the insulating properties of the joint are optimised.

After engagement of the pipe lengths 2, 4 with the insert 6, the sleeve 14 is heated to cause it to recover. On heating, the adhesive layer thereon is caused to melt so as to bond the sleeve to the pipe lengths, 2, 4 and thereby seal the joint.

Figures 4 and 5 show a wraparound sleeve using a reusable resilient girdle.

Referring to Figure 4, a pair of straps 16 are attached, by stitching, to one end of a heat recoverable fabric wraparound sleeve 18 that is coated with a hot melt adhesive. The straps hold a bar 20 which acts as the closure member. A resilient girdle 22 comprises a metal buckle 24 and an elastic silicone rubber band 26. The girdle has fastening means 28 which, as shown in Figure 5 comprise press-studs which lock together when the girdle 24 is placed around the heat recoverable sleeve 18. The sleeve is provided with an internal electric heating element 30.

When installing the sleeve, it is first wrapped around the joint with the sleeve end carrying the closure member overlapping the opposing plain sleeve end. The metal buckle 24 of the girdle 26 is then engaged with the bar 20 and the girdle pulled tight around the sleeve. The press-studs 38 can then be engaged to hold the girdle stretched around the sleeve. The electric heating element is then powered to heat the sleeve to its recovery temperature. During recovery, because the girdle 26 is stretched, it can follow the sleeve as it recovers and hold the sleeve tightly in its wrapped configuration. After recovery, the press-studs are released and the girdle removed. The sleeve remains in position, held by the hot melt adhesive.

## Claims

1. An assembly for joining and electrically insulating adjacent lengths (2,4) of an elongate hollow metallic substrate, which comprises a tubular insert (6) for receiving the ends of the adjacent lengths of the substrate, the insert having a circumferentially extending rib (8) for preventing the abutting ends (10,12) of the substrate lengths from coming into contact, and a heat-recoverable sleeve (14) for enclosing and sealing the joint, the sleeve being coated with a layer of a bonding material for bonding the sleeve to the underlying lengths of the substrate.

2. An assembly as claimed in claim 1, in which the insert (6) is arranged to be inserted within the ends of the lengths (2,4) of substrate, with the rib (8) standing proud of the outer circumferential surface of the insert.

3. An assembly as claimed in claim 1, in which the insert (6) is arranged to receive the ends of the lengths of substrates inserted therewithin, the rib (8) being proud of the inner circumferential surface of the insert.

4. An assembly as claimed in any one of the preceding claims, in which the heat-recoverable sleeve (14) is formed from a fabric.

5. An assembly as claimed in any one of the preceding claims, in which the bonding material is an adhesive.

6. A method of joining and electrically insulating adjacent lengths (2,4) of an elongate hollow metallic substrate, which comprises:

a) engaging the ends of the lengths of substrate with a tubular insert (6), the insert having a circumferentially extending rib (8) to prevent the lengths of substrate from coming into abutting contact;

b) enclosing the joint with a heat-recoverable sleeve (14) that is coated with a layer of bonding material; and

c) heating the sleeve to cause it to recover so as to seal the joint.

7. A method as claimed in claim 6, in which the sleeve (14) is a wraparound sleeve.

8. A method as claimed in claim 7, in which the sleeve (14) is wrapped the joint at least twice.

9. A method as claimed in claim 7 or claim 8, in which the sleeve is secured in the wrapped around configuration by means of a girdle member (22) of an elastomeric heat-resistant material.

10. An electrically insulating joint between adjacent lengths (2,4) of an elongate hollow metallic substrate, which comprises a tubular insert (6) formed of electrically insulating material having a rib (8) which abuts against opposing ends (10,12) of the lengths of elongate hollow metallic substrate and a recoverable sleeve (14) recovered over the tubular insert and the end regions of the lengths of substrate.

*Fig .1.*

*Fig .2.*

*Fig .3.*

0 240 230

Fig.4.

Fig.5.